# EUROPEAN PATENT SPECIFICATION

(11) **EP 1 612 925 B1**
(45) Date of publication and mention of the grant of the patent: **16.07.2014**
(21) Application number: 05100436.4
(22) Date of filing: 24.01.2005
(51) Int. Cl.: H02P 6/14, H02P 1/50, H02P 1/52, H02P 6/18, H02P 25/02

(54) **A brushless DC motor controller**
Steuergerät für einen bürstenlosen Gleichstrommotor
Appareil de commande d'un moteur sans balai

(30) Priority: 01.07.2004 KR 2004051098
(43) Date of publication of application: 04.01.2006
(73) Proprietor: Samsung Electronics Co., Ltd., Suwon-si, Gyeonggi-do, 443-742 (KR)
(72) Inventor: Lee, Kwang Woon, Geonggi-Do (KR); Lee, Sang Taek, Seoul (KR)
(74) Representative: Walaski, Jan Filip

(56) References cited:
- JP-A- 2001 178 182
- US-A- 4 565 957
- US-A- 5 457 375
- US-B1- 6 459 230

## Description

The present invention relates to a controller for a brushless direct current motor having a rotor, the controller comprising phase current generating means operable to drive the motor in an acceleration mode.

Generally, a brushless direct current (BLDC) motor uses a rectifying circuit composed of switching elements instead of mechanical elements such as a brush and a commutator. The BLDC motor has the advantages that it does not need brushes to be replaced as well as exhibiting relatively low electromagnetic interference and driving noise.

The BLDC motor is supplied with power by use of a power conversion apparatus which converts AC power into multiple-phase (preferably three-phase) power in the form of a pulse train. A controlling unit controls the rotational speed of the BLDC motor based on the phase of the current of the multiple-phase pulse train supplied to the BLDC motor, and position and speed information of a rotor. More specifically, the controlling unit controls the rotation speed of the BLDC motor to follow a speed command input from outside.

The optimum efficiency of the BLDC motor is achieved when the position of the rotor is coincident with the commutation time point of phase current. Thus, a device is required which detects the position of the rotor. In known systems, a position sensor, such as an encoder, is employed for detecting the rotor position. However, since an encoder is large and expensive, an alternative method for detecting the rotor position has been sought. An electric circuit which detects the rotor position using a zero crossing point of back electromotive force (BEMF) of the BLDC motor has been developed. Therefore, a BLDC motor can be operated based on the detection of the rotor position using an electric circuit instead of a position sensor such as an encoder. This is called "sensorless operation".

Prior to sensorless operation of the BLDC motor, a setup drive is required. Namely, system initialisation which initialises the inverter and control parameters is performed, and then two phases (in case of a three phase motor) are magnetised to forcibly align the rotor. After alignment of the rotor, the motor is synchronously accelerated as phase voltage and a driving frequency are increased to respective predetermined values. When the driving frequency and the phase voltage reach the respective predetermined values after the synchronous acceleration, the driving frequency is fixed thereto while the phase voltage is varied. At this point, the mode is converted to sensorless operation for detecting a zero-crossing point of back electromotive force (BEMF). Therefore, sensorless operation then controls phase current conversion and the rotational speed of the motor which is performed using the zero-crossing point.

In the setup, since the position of the rotor cannot be easily detected because of a weak BEMF, a predetermined voltage is applied to the stator windings to synchronously accelerate the rotor. Therefore, if the load on the BLDC motor is varied, there is a high probability that the time point at which the voltage is supplied to the stator windings will not be synchronised to the rotor position. If this occurs, the motor cannot be normally operated because a transient current is supplied to the motor (and a transient current protection circuit will stop the motor operating). Also, as a heavy torque variation occurs, the zero-crossing point of the BEMF cannot be detected with any precision and thus, the motor will not be able to operate with sensorless operation.

Therefore, it is an object of the invention to provide a method for controlling a brushless direct current (BLCD) motor which can stably convert a current operation mode to a sensorless operation mode so as not to supply a transient current to the BLDC motor at its start drive stage.

US4565957 discloses a motor control method that comprises establishing the rotor in a known starting position, and then operating an inverter asynchronously in a second mode. After the motor has reached a preset speed, operation in a third mode occurs and the inverter is synchronized with the motor.

US5457375 discloses a motor in which a commutation controller samples the waveshape during each commutation interval to obtain commutation angle information. The controller provides control inputs to an inverter to control commutation angle in response to the sample information.

The present invention relates to a controller for a brushless direct current motor having a rotor, the controller comprising phase current generating means operable to drive the motor in an acceleration mode.

According to an aspect of the invention, there is provided a synchronous acceleration control method as set out in claim 1. Preferred features of this aspect are set out in claims 2 to 12.

According to another aspect of the invention, there is provided a controller for a brushless direct current motor (BLDC) as set out in claim 13.

An embodiment of the present invention will be described, by way of example only, and with reference to the accompanying drawings in which:
Figure 1 is an apparatus for controlling a brushless direct current (BLDC) motor according to one embodiment of the present invention;
Figure 2 are waveform diagrams illustrating changes of frequency and voltage in a setup for a senseless operation of the BLDC motor according to one embodiment of the present invention;
Figures 3a to 3c are waveform diagrams illustrating phase currents and back electromotive forces (BEMFs) when phase voltage of the BLDC motor is of a predetermined magnitude;
Figures 4a to 4c are waveform diagrams illustrating phase currents according to a rotator position (BEMF) and a voltage applying time point at the setup stage of the BLDC motor;
Figures 5a to 5d are waveform diagrams illustrating changes of phase current according to a voltage applying time point of a voltage supplied to stator windings lags or leads with respect to a rotor position;
Figure 6 is a flowchart illustrating a method for controlling a BLDC motor according to the present invention; and
Figures 7a and 7b are waveform diagrams of currents at a synchronous acceleration stage in the prior art and the present invention, respectively.

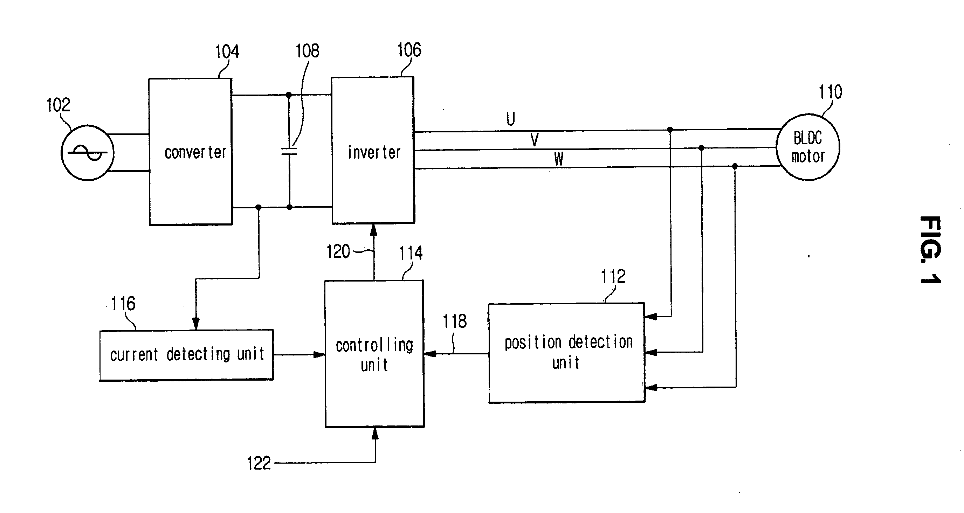

As shown in Figure 1, a power conversion device composed of a converter 104, a capacitor 108 and an inverter 106 converts AC power supplied from an AC power source 102 into three phase AC power in the form of a pulse train. The pulse train is provided to a brushless direct current (BLDC) motor 110. A position detecting unit 112 obtains the position of the rotor in three phase AC power (U, V, W) supplied to the BLDC motor 110 from the inverter 106, and generates a position detection signal 118. The position detection signal 118 generated by the position detection unit 112 is provided to a controlling unit 114 which generates an inverter control signal 120 based thereon. The controlling unit 114 outputs the inverter control signal 120 to control the phase commutation time point of the three phase AC power (U, V, W) output from the inverter 106, as well as the magnitude of the phase current, so that a rotation speed of the BLDC motor 110 follows the speed command 122. A current detection unit 116 detects the current of the DC power fed from the converter 104 to the inverter 106, and provides this to the controlling unit 114. The controlling unit 114 controls the time at which the voltage is supplied to the stator windings. This is based on the information about the current value so that a transient current is not applied to the BLDC motor 110.

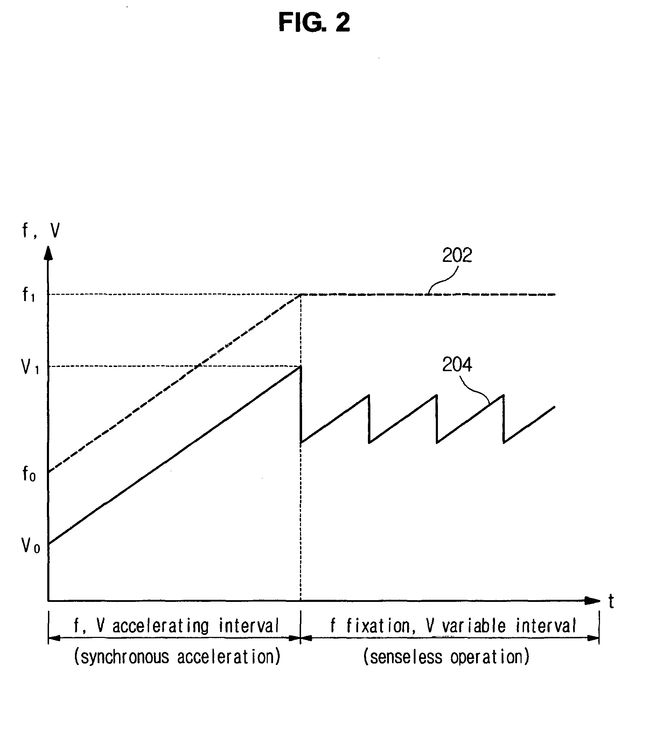

As shown in Figure 2, an initial driving frequency 202 of f₀ and phase voltage 204 of V₀ are increased to f₁ and V₁, respectively. After that the driving frequency 202 is fixed at f₁, and the phase voltage 204 is varied around V₁. While the phase voltage 204 is varied, positional information relating to the rotor is obtained by detecting a zero crossing point of back electromotive force (BEMF). If the magnetic fluxes of the stator and the rotor of the BLDC motor are synchronized within a stable range, the BLDC motor then operates in a sensorless mode.

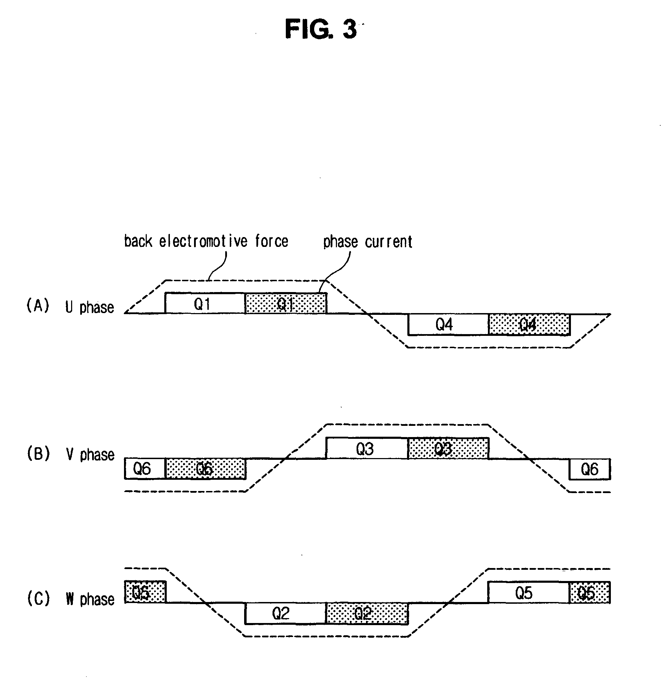

As shown in Figures 3a to 3c, if the phase voltage is the predetermined magnitude, the phase difference between phase current and BEMF in respective phases has to be within a predetermined range to substantially synchronize with one another.

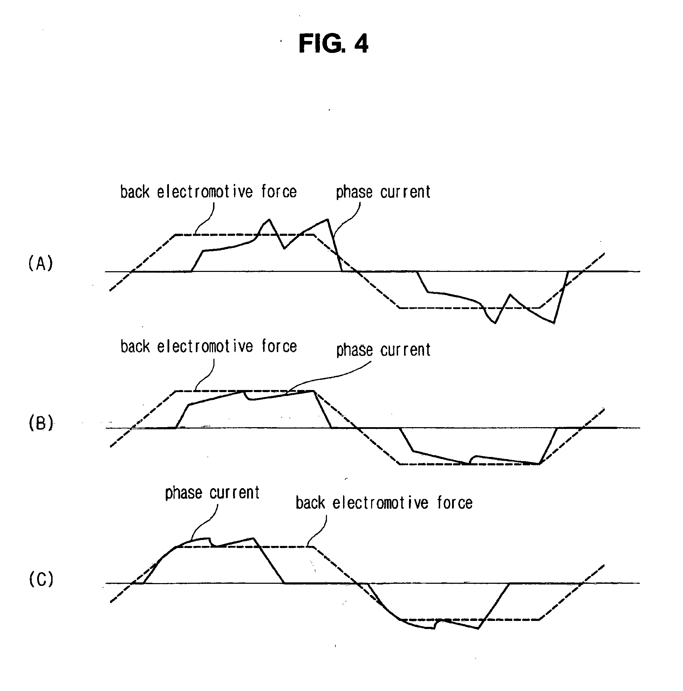

Figure 4a is a waveform when the voltage is supplied to stator windings late (lagging) with respect to the rotor position. In this case, the phases of the BEMF and phase current are not synchronised with each other. This results in the phase current being excessively large during the latter part of the phase current. Figure 4b is a waveform in the case where the voltage applying time point of the voltage supplied to stator windings is synchronised with the rotor position. In this case, there is no time where the phase current is excessive (or is above a threshold). This means that the BLDC motor can operate stably. Figure 4c is a waveform when the voltage is supplied to stator windings early (leading) with respect to the rotor position. In this case, the phases of the BEMF and phase current are not synchronised with each other and so the phase current is excessive during the earlier part of the phase current.

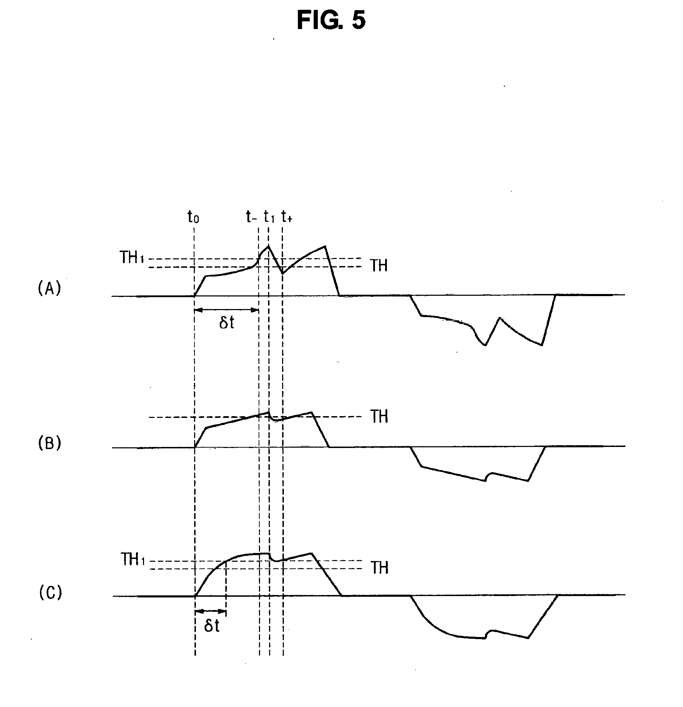

Figures 5a to 5d are waveform diagrams illustrating changes of phase current when the voltage is supplied to the stator at a time which lags or leads with respect to a rotor position. The method for controlling the BLDC motor according to one embodiment of the present invention serves to detect whether the time point at which the voltage is supplied to the stator windings lag or lead the rotor position based on a time between the time at which the volatage is applied and another time point when phase current is excessively large. The time point at which the voltage is applied to the stator is controlled so that the phase current supplied to the BLDC motor is not excessively large.

Figure 5b is the waveform where the time of the voltage supplied to the stator windings is synchronised with respect to the rotor position. An average current TH is an average of non-conversion phase current flowing in the stator windings, which is measured when a rated load is applied to the BLDC motor during the synchronous acceleration stage and the time at which voltage is applied to the stator windings is synchronised with the rotor position. In the embodiment of the present invention, a transient current TH1 is defined as a case where a magnitude of phase current is between about 10-20% larger than the average current TH. If the phase current exceeds the value of TH1, it is determined that a transient current has occurred.

Also, the embodiment of the present invention determines whether the time at which voltage is supplied to the stator windings lags or leads the stator position based on the length of time that the transient current TH1 is exceeded. Namely, in a case as shown in Figure 5a, the time from phase commutation time point t0 to the time point at which the transient current TH1 is detected (i.e., a transient current detection time δt) is relatively long. However, in the case shown in Figure 5c, the transient current detection time δt is relatively short.

A 15° rotating prediction time t_15° from a phase commutation time point t0 to a time point where the rotor will have rotated 15° therefrom is calculated. If the transient current detection time δt is equal to or less than the 15° rotating prediction time t_15°, (i.e. δt ≤ t_15°), it is determined that the time at which the voltage is supplied to the stator windings leads the rotor position, as shown in Figure 5c. After that, the time at which the voltage is supplied to the stator windings is delayed. This is shown by the next phase commutation time point t1 being delayed to t+, as shown in Figure 5a.

Also, a 45° rotating prediction time t_45° from a phase commutation time point t0 to a time point where a rotor will have rotated 45° therefrom is calculated. If the transient current detection time δt is larger than the 15° rotating prediction time t_15° and equal to or less than the 45° rotating prediction time t_45°, (i.e. t_15° < δt ≤ t_45°) it is determined that the time at which the voltage is supplied to the stator windings leads the rotor position, as shown in Figure 5a. After that, the time at which the voltage is supplied to the stator windings is shortened for the next phase commutation time point. This is shown by the next commutation time point t1 being shortened to t-, as shown in Figure 5a.

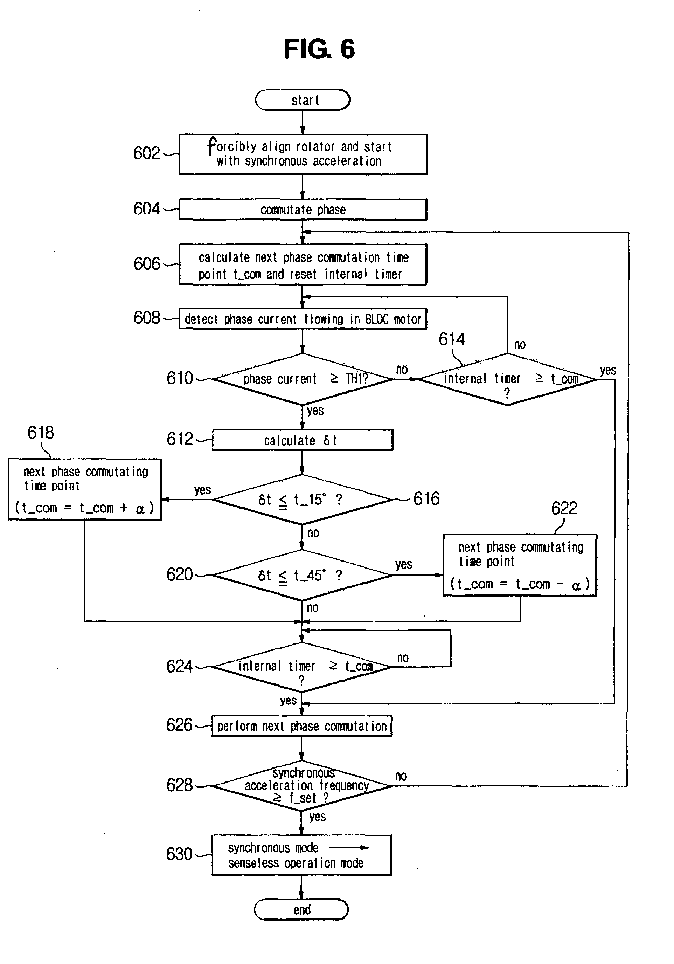

As shown in Figure 6, if the BLDC motor has three phases, the rotor is forcibly aligned by exciting two phases thereof. After the rotor is aligned, a synchronous acceleration operation of the BLDC motor, in which phase voltage and driving frequency are increased to respective predetermined values, is performed at step 602. Now, as the synchronous acceleration starts, a phase commutation operation is performed at step 604. For example, when forcibly aligning, if the windings of the U-V phases are magnetised, a phase is commutated to U-W phases to excite windings of U-W phases. The controlling unit 114 calculates a time t_com which determines when the next phase commutation time point takes place. This is done using an internal timer (not shown). The internal timer is then reset to "0" at step 606. After that, the controlling unit 114 detects the magnitude of non conversion phase current flowing in the BLDC motor using a current detection unit 116 at step 608. The controlling unit 114 then performs a comparison to determined whether the phase current is larger than the transient current TH1 at step 610. If the phase current is larger than the transient current TH1, the controlling unit 114 calculates a transient current detection time δt from the phase commutation time point to a time point to detect a transient current at step 612. However, if the phase current is less than the transient current TH1, the controlling unit performs phase current detection and comparison operations at steps 608 and 610 until the internal timer reaches a next phase commutation time point t_com at step 614. If the internal timer reaches the next phase commutation time point t_com without the phase current exceeding TH1, a phase commutation is performed at step 626.

If the transient current detection time δt is calculated at step 612, it is compared with the 15° rotating prediction time t_15° at step 616. If the transient current detection time δt is equal to or less than the 15° rotating prediction time t_15°, the commutation time point of the next phase is delayed by a value of α at step 618. Here, the value of α is, preferably, less than the 15° rotating prediction time t_15° (for example, an absolute value of a 10° rotating prediction time t_10° of the rotor). If the transient current detection time δt is larger than the 15° rotating prediction time t_15°, the transient current detection time δt is compared with the 45° rotating prediction time t_45° at step 620. If the transient current detection time δt is equal to or less than the 45° rotating prediction time t_45°, the commutation time point of the next phase is reduced (is early) by the value of α at step 622.

If the transient current detection time δt is larger than the 45° rotating prediction time t_45°, then the value of the internal timer is compared with the commutation time point of the next phase t_com at step 624. If the counting value is larger than the commutation time point of the next phase t_com, a phase commutation operation is performed at step 626. Here, the phase commutation time point is one of phase commutation time points which are calculated by the controlling unit 114 or is early/late according to the transient current detection.

Once the synchronous acceleration frequency reaches the predetermined frequency (for example, a frequency f_set necessary for a sensorless operation) through synchronous acceleration at step 628, the BLDC motor is controlled to operate in a condition that the frequency is fixed while a phase voltage is varied. At this time, the motor begins operating in the sensorless operation mode and detects zero crossing points of the BEMF at step 630. Therefore, a sensorless operation mode for controlling the phase commutation and the rotation speed of the BLDC motor is performed using the zero crossing point detected in such processes.

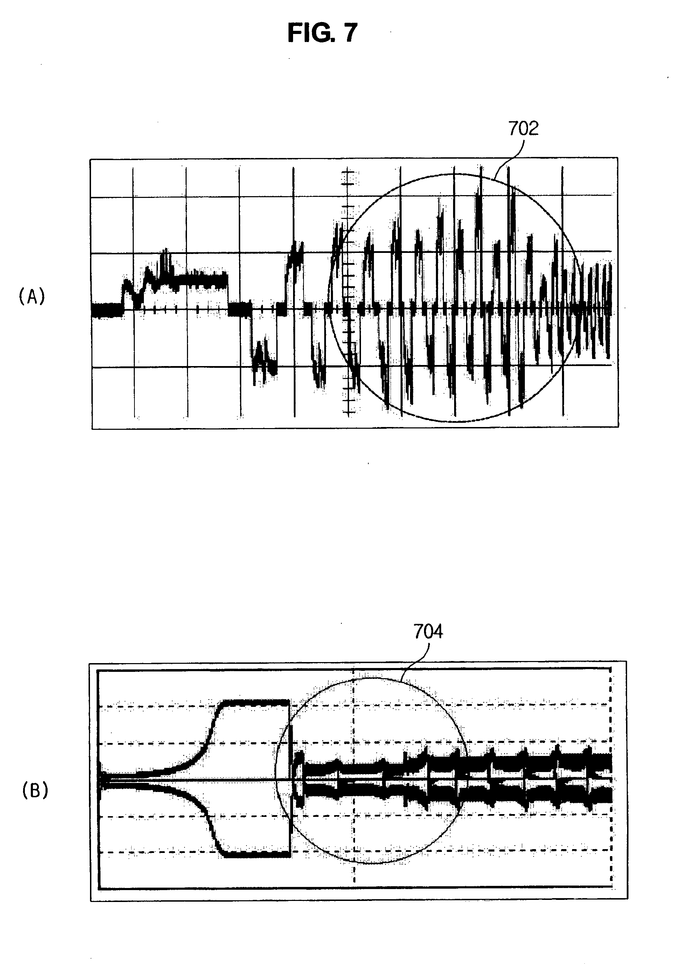

Figure 7a is waveform diagram of the current flowing during the synchronous acceleration stage in the prior art, in which the units of the vertical axis are 2A/div. Figure 7b is a waveform diagram of current at synchronous acceleration stage, in which the units of the vertical axis are 0.5A/div. More specifically, the current waveform 702 of Figure 7a is about 3-4A, while the current waveform 704 of Figure 7b is 0.25A.

Therefore, the method for controlling the BLDC motor according to the present invention reduces torque ripples and driving noise as it does not supply transient current to the BLDC motor during setup. Also, the motor stably begins operating in the sensorless mode.

## Claims

1. A synchronous acceleration control method of a brushless direct current motor (BLDC), comprising:
performing a phase commutation of phase current at a phase commutation time point (t₀), while the BLDC motor is synchronously accelerated;
detecting a phase current applying time point (t₁) when a magnitude of phase current supplied to the BLDC motor exceeds a predetermined value (TH₁); and
controlling a voltage applying time point when voltage is applied to stator windings with respect to a rotation position of a rotator based on a transient current detection time δt between the phase commutation time point (t₀) and the phase current applying time point (t₁), so that the phase current is not excessively large.

2. The method as set forth in claim 1, wherein the magnitude of phase current is a magnitude of non-commutating phase current supplied to the BLDC motor.

3. The method as set forth in claim 1, wherein the predetermined value is set to 110∼120% of the average of the non-commutating phase current supplied to the BLDC motor, which is measured in a state that a standard load is applied to the BLDC at the step that the BLDC motor is synchronously accelerated and the voltage applying time point is synchronized to the rotation position of the rotator.

4. The method as set forth in claim 1, further comprising:
determining whether the time is within a first range or a second range;
determining that the voltage applying time point leads if the time is within the first range, and delaying a next phase commutation time point by a predetermined delaying time; and
determining that the voltage applying time point lags if the time is within the second range, and shortening a next phase commutation time point by a predetermined shortening time.

5. The method as set forth in claim 4, wherein the first range is a first time interval between the phase commutation time point and a first time point when the rotator is expected to rotate by a first angle from the phase commutation time point; and the second range is a second time interval between the first time point and a second time point when the rotator is expected to rotate by a second angle from the first time point.

6. The method as set forth in claim 5, wherein the first and second angles are 15° and 45°, respectively.

7. The method as set forth in claim 4, wherein the predetermined delaying time or the predetermined shortening time is obtained as an absolute value of a time interval requiring that the rotator rotates by 10°∼15°.

8. The method as set forth in claim 4, further comprising:
performing another phase commutation operation based on a time point generated after delaying or shortening the next commutation time point.

9. The method as set forth in claim 6, comprising:
forcibly aligning a rotator;
determining whether the time between the phase commutation time point and the phase current applying time point is within a first range or a second range;
determining t hat the voltage applying time point is early if the time is within the first range and delaying a next phase commutation time point by a predetermined delaying time; and
determining that the voltage applying time point is late if the time is within the second range and shortening a next phase commutation time point by a predetermined shortening time;
performing other phase conversion based on a phase commutation time; and being converted to a senseless operation mode if a driving frequency is a preset value.

10. The method as set forth in claim 9, the first range is a first time interval between the phase commutation time point and a first time point when the rotator is expected to rotate by a first angle from the phase commutation time point; and the second range is a second time interval between the first time point and a second time point when the rotator is expected to rotate by a second angle from the first time point.

11. The method as set forth in claim 10, wherein the first and second angles are 15° and 45°, respectively.

12. The method as set forth in claim 9, wherein the predetermined delaying time or the predetermined shortening time is obtained as an absolute value of a time interval requiring that the rotator rotates by 10°∼15°.

13. A controller for a brushless direct current motor (BLDC), comprising:
means for performing a phase commutation of phase current at a phase commutation time point (t₀), while the BLDC motor is synchronously accelerated;
means for detecting a phase current applying time point (t₁) when a magnitude of phase current supplied to the BLDC motor exceeds a predetermined value (TH₁); and
means for controlling a voltage applying time point when voltage is applied to stator windings with respect to a rotation position of a rotator based on a transient current detection time δt between the phase commutation time point (t₀) and the phase current applying time point t₁, so that the phase current is not excessively large.

## Patentansprüche

1. Steuerungsverfahren für synchrone Beschleunigung eines bürstenlosen Gleichstrommotors, umfassend:
Ausführen einer Phasenkommutierung von Phasenstrom zu einem Zeitpunkt (t₀) der Phasenkommutierung, während der bürstenlose Gleichstrommotor synchron beschleunigt wird;
Detektieren eines Zeitpunkts (t₁) zum Anwenden von Phasenstrom, wenn eine Größenordnung von Phasenstrom, der dem bürstenlosen Gleichstrommotor zugeführt wird, einen vorgegebenen Wert (TH₁) überschreitet; und
Steuern eines Zeitpunkts zum Anlegen von Spannung, wenn Spannung auf Ständerwicklungen in Bezug auf eine Rotationsposition eines Rotors, beruhend auf einer Detektionszeit δt von transientem Strom zwischen dem Zeitpunkt (t₀) der Phasenkommutierung und dem Zeitpunkt (t₁) zum Anwenden von Phasenstrom, angewandt wird, sodass der Phasenstrom nicht übermäßig groß ist.

2. Verfahren, wie in Anspruch 1 dargelegt, wobei die Größenordnung von Phasenstrom eine Größenordnung von nicht kommutierendem Phasenstrom ist, der dem bürstenlosen Gleichstrommotor zugeführt wird.

3. Verfahren, wie in Anspruch 1 dargelegt, wobei der vorgegebene Wert auf 110∼120 % des Durchschnitts des nicht kommutierenden Phasenstroms eingestellt ist, der dem bürstenlosen Gleichstrommotor zugeführt wird, der in einem Zustand gemessen wird, dass eine Standardlast auf den bürstenlosen Gleichstrommotor bei der Stufe angewandt wird, bei welcher der bürstenlose Gleichstrommotor synchron beschleunigt wird und der Zeitpunkt des Anlegens der Spannung auf die Rotationsposition des Rotors synchronisiert wird.

4. Verfahren, wie in Anspruch 1, dargelegt, ferner umfassend:
Ermitteln, ob die Zeit innerhalb eines ersten
Bereichs oder eines zweiten Bereichs liegt; Ermitteln, dass der Zeitpunkt zum Anlegen von Spannung voreilt, wenn die Zeit innerhalb des ersten Bereichs liegt und Verzögern eines Zeitpunkts der nächsten Phasenkommutierung um eine vorgegebene Verzögerungszeit; und
Ermitteln, dass der Zeitpunkt zum Anlegen von Spannung nacheilt, wenn die Zeit innerhalb des zweiten Bereichs liegt, und Verkürzen eines Zeitpunkts der nächsten Phasenkommutierung um eine vorgegebene Verkürzung der Zeit.

5. Verfahren, wie in Anspruch 4 dargelegt, wobei der erste Bereich ein erstes Zeitintervall zwischen dem Zeitpunkt der Phasenkommutierung und einem ersten Zeitpunkt ist, wenn der Rotor durch einen ersten Winkel ab dem Zeitpunkt der Phasenkommutierung rotieren soll; und der zweite Bereich ein zweites Zeitintervall zwischen dem ersten Zeitpunkt und einem zweiten Zeitpunkt ist, wenn der Rotor durch einen zweiten Winkel ab dem ersten Zeitpunkt rotieren soll.

6. Verfahren, wie in Anspruch 5 dargelegt, wobei des ersten und zweiten Winkel 15° bzw. 45° sind.

7. Verfahren, wie in Anspruch 4 dargelegt, wobei die vorgegebene Verzögerungszeit oder die vorgegebene Verkürzung der Zeit als ein absoluter Wert eines Zeitintervalls erhalten wird, das erfordert, dass der Rotor um 10°∼15° rotiert.

8. Verfahren, wie in Anspruch 4, dargelegt, ferner umfassend:
Ausführen einer weiteren Operation von Phasenkommutierung, die auf einem Zeitpunkt beruht, der nach Verzögern oder Verkürzen des nächsten Zeitpunkts der Kommutierung generiert wurde.

9. Verfahren, wie in Anspruch 6 dargelegt, umfassend:
Zwangsweises Ausrichten eines Rotors;
Ermitteln, ob die Zeit zwischen dem Zeitpunkt der Phasenkommutierung und Zeitpunkt der Anwendung des Phasenstroms innerhalb eines ersten Bereichs oder eines zweiten Bereichs liegt;
Ermitteln, dass der Zeitpunkt zum Anlegen von Spannung früh ist, wenn die Zeit innerhalb des ersten Bereichs liegt und Verzögern eines Zeitpunkts der nächsten Phasenkommutierung um eine vorgegebene Verzögerungszeit ; und
Ermitteln, dass der Zeitpunkt zum Anlegen von Spannung spät ist, wenn die Zeit innerhalb des zweiten Bereichs liegt und Verkürzen eines Zeitpunkts der nächsten Phasenkommutierung um eine vorgegebene Verkürzung der Zeit.
Ausführen anderer Phasenumwandlung, die auf einer Kommutierungszeit der Phasen beruht; und Umwandeln in einen sinnlosen Betriebsmodus, wenn eine Antriebsfrequenz ein voreingestellter Wert ist.

10. Verfahren, wie in Anspruch 9 dargelegt, der erste Bereich ist ein erstes Zeitintervall zwischen dem Zeitpunkt der Phasenkommutierung und einem ersten Zeitpunkt, wenn der Rotor durch einen ersten Winkel ab dem Zeitpunkt der Phasenkommutierung rotieren soll; und der zweite Bereich ein zweites Zeitintervall zwischen dem ersten Zeitpunkt und einem zweiten Zeitpunkt ist, wenn der Rotor durch einen zweiten Winkel ab dem ersten Zeitpunkt rotieren soll.

11. Verfahren, wie in Anspruch 10 dargelegt, wobei des ersten und zweiten Winkel 15° bzw. 45° sind.

12. Verfahren, wie in Anspruch 9 dargelegt, wobei die vorgegebene Verzögerungszeit oder die vorgegebene Verkürzung der Zeit als ein absoluter Wert eines Zeitintervalls erhalten wird, das erfordert, dass der Rotor um 10°∼15° rotiert.

13. Steuergerät für einen bürstenlosen Gleichstrommotor, umfassend:
Mittel zum Ausführen einer Phasenkommutierung von Phasenstrom zu einem Zeitpunkt (t₀) der Phasenkommutierung, während der bürstenlose Gleichstrommotor synchron beschleunigt wird;
Mittel zum Detektieren eines Zeitpunks (t₁) zum Anwenden von Phasenstrom, wenn eine Größenordnung von Phasenstrom, der dem bürstenlosen Gleichstrommotor zugeführt wird, einen vorgegebenen Wert (TH₁) überschreitet; und
Mittel zum Steuern eines Zeitpunkts zum Anlegen von Spannung, wenn Spannung auf Ständerwicklungen in Bezug auf eine Rotationsposition eines Rotors, beruhend auf einer Detektionszeit δt für transienten Strom zwischen dem Zeitpunkt (t₀) der Phasenkommutierung und dem Zeitpunkt (t₁) zum Anwenden von Phasenstrom, angewandt wird, sodass der Phasenstrom nicht übermäßig groß ist.

## Revendications

1. Procédé de commande d'accélération synchrone d'un moteur sans balais à courant continu (BLDC), comprenant :
l'exécution d'une commutation de phase du courant de phase à un point temporel de commutation de phase (t0), quand le moteur BLDC est accéléré de manière synchrone ;
la détection d'un point temporel d'application de courant de phase (t1) quand une grandeur du courant de phase fourni au moteur BLDC dépasse une valeur prédéterminée (TH1) ; et
la commande d'un point temporel d'application de tension quand une tension est appliquée aux enroulements statoriques par rapport à une position de rotation d'un rotateur en fonction d'un temps de détection de courant transitoire δt entre le point temporel de commutation de phase (t0) et le point temporel d'application de courant de phase (t1) de telle sorte que le courant de phase ne soit pas excessivement grand.

2. Procédé selon la revendication 1, dans lequel la grandeur du courant de phase est une grandeur du courant de phase non de commutation fourni au moteur BLDC.

3. Procédé selon la revendication 1, dans lequel la valeur prédéterminée est réglée à 110∼120% de la moyenne du courant de phase non de commutation fourni au moteur BLDC, lequel est mesuré lorsqu'une charge standard est appliquée au BLDC à l'étape à laquelle le moteur BLDC est accéléré de manière synchrone et le point temporel d'application de tension est synchronisé avec la position de rotation du rotateur.

4. Procédé selon la revendication 1, comprenant en outre :
la détermination que le temps est compris dans une première plage ou dans une seconde plage ;
la détermination que le point temporel d'application de tension est en avance si le temps est compris dans la première plage, et le retard d'un point de temps de commutation de phase suivant par un temps de retard prédéterminé ; et
la détermination que le point temporel d'application de tension est en retard si le temps est compris dans la seconde plage, et l'avancement d'un point temporel de commutation de phase suivant par un temps d'avancement prédéterminé.

5. Procédé selon la revendication 4, dans lequel la première plage est un premier intervalle de temps entre le point temporel de commutation de phase et un premier point temporel quand le rotateur doit tourner par un premier angle par rapport au point temporel de commutation de phase ; et la seconde plage est un second intervalle de temps entre le premier point temporel et un second point temporel quand le rotateur doit tourner par un second angle par rapport au premier point temporel.

6. Procédé selon la revendication 5, dans lequel les premier et second angles sont 15° et 45° respectivement.

7. Procédé selon la revendication 4, dans lequel le temps de retard prédéterminé ou le temps d'avancement prédéterminé est obtenu en tant que valeur absolue d'un intervalle de temps nécessitant que le rotateur tourne de 10∼15°.

8. Procédé selon la revendication 4, comprenant en outre :
l'exécution d'une autre opération de commutation de phase en fonction d'un point temporel généré après le retard ou l'avancement du point temporel de commutation suivant.

9. Procédé selon la revendication 6, comprenant :
l'alignement forcé d'un rotateur ;
la détermination que le temps entre le point temporel de commutation de phase et le point temporel d'application de courant de phase est compris dans une première plage ou une seconde plage ;
la détermination que le point temporel d'application de tension est en avance si le temps est compris dans la première plage, et le retard d'un point de temps de commutation de phase suivant par un temps de retard prédéterminé ; et
la détermination que le point temporel d'application de tension est en retard si le temps est compris dans la seconde plage, et l'avancement d'un point temporel de commutation de phase suivant par un temps d'avancement prédéterminé ;
l'exécution d'une autre conversion de phase en fonction d'un temps de commutation de phase ; et la conversion en un mode de fonctionnement sans détection si une fréquence de commande est une valeur préétablie.

10. Procédé selon la revendication 9, la première plage étant un premier intervalle de temps entre le point temporel de commutation de phase et un premier point temporel quand le rotateur doit tourner par un premier angle par rapport au point temporel de commutation de phase ; et la seconde plage étant un second intervalle de temps entre le premier point temporel et un second point temporel quand le rotateur doit tourner par un second angle par rapport au premier point temporel.

11. Procédé selon la revendication 10, dans lequel les premier et second angles sont 15° et 45° respectivement.

12. Procédé selon la revendication 9, dans lequel le temps de retard prédéterminé ou le temps d'avancement prédéterminé est obtenu en tant que valeur absolue d'un intervalle de temps nécessitant que le rotateur tourne de 10∼15°.

13. Unité de commande d'un moteur sans balais à courant continu (BLDC) comprenant :
un moyen pour exécuter une commutation de phase du courant de phase à un point temporel de commutation de phase (t0), quand le moteur BLDC est accéléré de manière synchrone ;
un moyen pour détecter un point temporel d'application de courant de phase (t1) quand une grandeur du courant de phase fourni au moteur BLDC dépasse une valeur prédéterminée (TH1) ; et
un moyen pour commander un point temporel d'application de tension quand une tension est appliquée aux enroulements statoriques par rapport à une position de rotation d'un rotateur en fonction d'un temps de détection de courant transitoire δt entre le point temporel de commutation de phase (t0) et le point temporel d'application de courant de phase (t1) de telle sorte que le courant de phase ne soit pas excessivement grand.
